# EUROPÄISCHE PATENTSCHRIFT

(11) **EP 2 661 983 B1**
(45) Veröffentlichungstag und Bekanntmachung des Hinweises auf die Patenterteilung: **12.04.2017**
(21) Anmeldenummer: 13166470.8
(22) Anmeldetag: 03.05.2013
(51) Int. Cl.: A45D 1/04, B23K 3/00

(54) **Gerät, insbesondere ein Haarstylinggerät**
Apparatus, in particular a hair-styling device
Appareil, notamment appareil de coiffure

(30) Priorität: 09.05.2012 DE 102012207714
(43) Veröffentlichungstag der Anmeldung: 13.11.2013
(73) Patentinhaber: BSH Hausgeräte GmbH, 81739 München (DE)
(72) Erfinder: Altmann, Berthold, 83374 Oderberg (DE); Blischke, Daniela, 92360 Mühlhausen (DE); Copitzky, Thomas, 83278 Traunstein (DE)

(56) Entgegenhaltungen:
- JP-A- 2005 334 962
- US-A- 2 542 629
- US-A- 3 924 097
- US-A- 3 955 064

## Beschreibung

Die vorliegende Erfindung betrifft ein Gerät, insbesondere ein Haarstylinggerät, mit einem Griffbereich und einem erhitzbaren Arbeitsbereich gemäß dem Oberbegriff des Anspruchs 1.

Herkömmlich Haarstylinggeräte, wie beispielsweise Lockenstäbe und Haarglätter, besitzen häufig Bauteilgruppen, insbesondere Arbeitsbareiche, die sehr heiß werden können (teilweise größer 200°C) und die zudem nach außen hin offen zugänglich sind. Hierdurch besteht insbesondere die Gefahr, dass es, wenn das Gerät im eingeschalteten Zustand in ungünstiger Umgebung abgelegt wird, zu Bränden kommen kann. Zumeist sind diese Geräte darüber hinaus derart gestaltet, dass ein direkter Kontakt der heißen Gerätepartien, das heißt beispielsweise des Arbeitsbereichs, mit einer ebenen, festen Oberfläche unter normalen Umständen vermeidbar ist. Die Distanz zwischen heißen Gerätepartien und der Unterlage ist aber trotzdem häufig so gering, dass es, wenn es sich um eine weiche und/oder flexible Unterlage handelt (zum Beispiel Handtücher oder sonstige Tücher), ein direkter Kontakt trotzdem nicht aufgeschlossen werden kann. Sollte die Unterlage dann zusätzlich aus einem hitzeempfindlichen oder sogar leicht entflammbaren Material bestehen, kann sich hieraus leicht ein Brand entwickeln.

Die JP 2005 334962 A offenbart ein Gerät, insbesondere eine Lötkolben, mit einem Griffbereich, einem erhitzbaren Arbeitsbereich und einen um den Griffbereich angeordneten Reflektor, der den Arbeitsbereich des Gerätes bei einem beliebigen Ablegen auf einer Unterlage in eine von der Unterlage beabstandete Position zwingt.
Die vorliegende Erfindung beschäftigt sich mit dem Problem, für ein Gerät der gattungsgemäßen Art eine verbesserte Ausführungsform anzugeben, die sich insbesondere durch eine sichere Handhabung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, ein Gerät mit einem Griffbereich und einem erhitzbaren Arbeitsbereich, beispielsweise ein Haarstylinggerät, hinsichtlich seiner geometrischen Form und hinsichtlich seiner Schwerpunktslage derart auszubilden, dass es bei einem beliebigen Ablegen auf einer Unterlage eine selbststabilisierende Lage einnimmt, in welcher der erhitzbare Arbeitsbereich nicht mit der Unterlage in Kontakt tritt und zudem noch eine möglichst große Distanz zu der Unterlage einnimmt. Dies soll durch die geometrische Ausgestaltung und durch eine passende Verteilung der Masse in dem Gerät selbst erreicht werden. Haarstylinggeräte beispielsweise, die heiße Oberflächen besitzen, haben meist eine stabförmige Grundgeometrie (zum Beispiel Lockenstab), wobei ein Stabende aus einem verhältnismäßig kühlen Griffbereich und das andere Stabende aus einem vergleichsweise heißen Arbeitsbereich besteht, der für das Haarstyling erforderlich ist. Die Geometrie und die Massenverteilung werden nun derart gewählt, dass sich das Gerät unabhängig von der Ausgangslage beim Ablegen automatisch in eine möglichst stabile Gleichgewichtslage bewegt, bei der sich die heißen Gerätekomponenten, das heißt beispielsweise der Arbeitsbereich, ausreichend weit von der Unterlage entfernen, um diese insbesondere nicht zu gefährden. Geometrische Formen, die eine derartige Eigenschaft besitzen, sich nach beliebiger Ablage selbsttätig in eine stabile Gleichgewichtslage zu begeben, sind zum Beispiel monostabile Polyeder oder der Gömböc (Körper, die eine weitestgehend homogene Dichte besitzen). Auf dem gleichen Prinzip beruht, das Stehaufmännchen (Körper, die eine inhomogene Massenverteilung besitzen). Entscheidend bei den geometrischen Formen bzw. Formkomponenten ist, dass der Schwerpunkt des Gerätes so gewählt wird, dass die am Gerät wirkenden Drehmomente in der Lage sind, das Gerät aufzurichten bzw. in eine sichere und stabile Lage zu überführen, bei welcher der heiße Arbeitsbereich zudem eine möglichst große Distanz zur Unterlage einnimmt. Erreicht werden kann dies beispielsweise dadurch, dass der Schwerpunkt ablageunabhängig über einer gerundeten Struktur, beispielsweise einer Halbkugel oder einem Halbellipsoid, liegt. In diesem Fall würde sich der kühle Griffbereich, innerhalb welchem der Schwerpunkt dann zu liegen kommt, automatisch auf die Unterlage hin bewegen, während sich der heiße Arbeitsbereich des Geräts automatisch von der Ablageoberfläche, das heißt von der Unterlage, weg bewegt. Selbstverständlich können hier im Griffbereich auch andere, insbesondere kantige, Formen vorgesehen werden, die zudem ein unbeabsichtigtes Wegrollen nach Erreichen der stabilen aufgerichteten Endlage verhindern.

Erfindungsgemäß sind der Schwerpunkt und die Form des Gerätes derart angeordnet bzw, ausgebildet, dass das Gerät in der Art eines Stehaufmännchens funktioniert, wobei der Griffbereich eine halbkugelartige oder halbellipsoide Gestalt oder eine gömböcartige Außenform aufweist. Stehaufmännchen sind aus vielen Kinderzimmern bekannt und stehen prinzipiell für einen Körper mit einer inhomogenen Massenverteilung. Wird das erfindungsgemäße Gerät, beispielsweise ein Lockenstab oder ein Haarglätter, in ähnlicher Weise hinsichtlich seiner Form bzw. seines Schwerpunktes ausgebildet, wobei der Arbeitsbereich vergleichsweise leicht und der kühle Griffbereich vergleichsweise schwer sein sollte, kann eine selbstaufrichtende und selbststabilisierende Lage erreicht werden, sofern das Gerät auf einer Unterlage abgelegt wird. Hierzu ist insbesondere denkbar, dass im Griffbereich des Gerätes eine Heizeinrichtung und/oder ein Akkumulator angeordnet sind. Sowohl die Heizeinrichtung als auch ein Akkumulator sind dabei vergleichsweise schwere Komponenten, die dazu führen, die Schwerpunktslage des Geräts positiv im Hinblick auf eine selbststabilisierende und selbstaufrichtende Funktion zu beeinflussen. Selbstverständlich können zusätzlich oder alternativ im Griffbereich auch noch Gewichtselemente vorgesehen sein, beispielsweise aus Metall. Durch das Vorsehen einer vergleichsweise hohen lokalen Masse im Griffbereich, beispielsweise durch Akkus oder Batterien, kann zudem ein kabelloser Betrieb des Geräts gewährleistet werden, was insbesondere bei Lockenstäben und Haarglättern von großem Vorteil ist. Dabei wird klargestellt, dass das Gerät nicht nur auf Stylinggeräte, wie beispielsweise Lockenstäbe und Haarglätter beschränkt ist, sondern auch auf andere Geräte, wie beispielsweise ein Lötkolben, übertragbar bzw. bei derartigen Geräten anwendbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: zwei Ansichten auf ein erfindungsgemäßes Gerät in der Art eines Haarglätters in abgelegtem Zustand,
- Fig. 2: eine Ansicht auf ein erfindungsgemäßes und als Lockenstab ausgebildetes Gerät bei einer Aufrichtbewegung nach dem Ablegen.

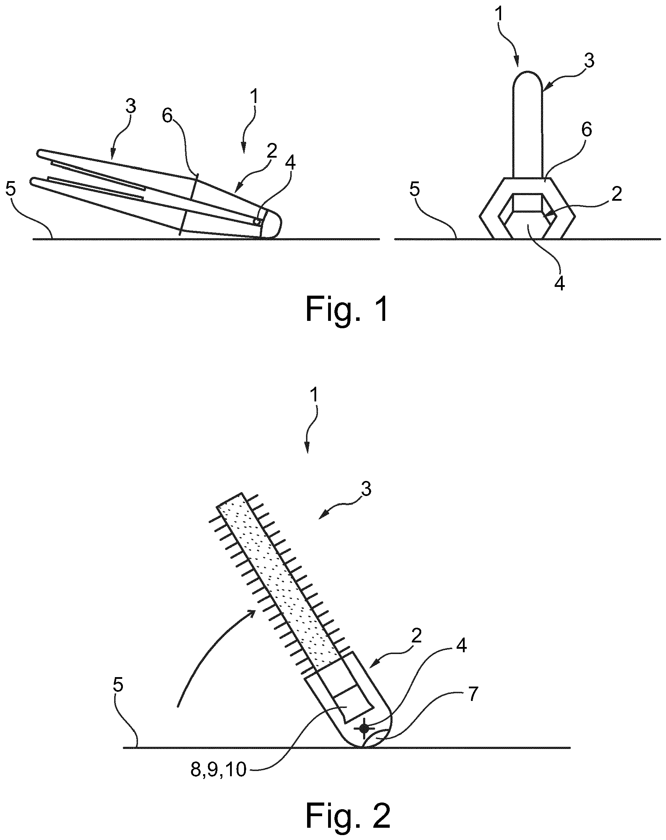

Entsprechend den Figuren 1 und 2, weist ein erfindungsgemäßes Gerät 1 einen vergleichsweise kühlen Griffbereich 2 auf, an welchem es anfassbar ist, sowie einen erhitzbaren Arbeitsbereich 3, an welchem es bis zu 200°C heiß oder sogar heißer werden kann. Gemäß der Figur 1 ist dabei das erfindungsgemäße Gerät 1 als Haarglätter ausgebildet, wogegen es gemäß der Figur 2 als Lockenstab ausgebildet ist. Denkbar ist aber selbstverständlich auch eine beliebige andersartige Ausgestaltung, insbesondere beispielsweise als Lötkolben. Erfindungsgemäß ist nun das Gerät 1 hinsichtlich seiner äußeren Form und seiner Lage des Schwerpunkts 4 derart ausgebildet, dass es bei einem beliebigen Ablegen auf einer Unterlage 5 eine selbststabilisierende und zugleich selbstaufrichtende Lage einnimmt, in der der erhitzbare Arbeitsbereich 3 nicht mit der Unterlage 5 in Kontakt steht, sondern vielmehr sogar eine möglichst große Distanz zu dieser einnimmt, um insbesondere eine Brandgefahr bei einer unebenen Unterlage 5, wie beispielsweise bei einem Handtuch, zu minimieren.

Um die selbststabilisierende Lage erreichen zu können, kann der Griffbereich 2 eine unrunde Außenkontur aufweisen, beispielsweise in der Form eines achteckigen Griffschutzes 6 (vgl. Figur 1), die ein Rollen des Gerätes 1 auf der Unterlage 5 in abgelegtem Zustand zuverlässig verhindert. Das Gerät 1 gemäß der Figur 2 weist einen derartigen Griffschutz 6 zwar nicht auf, jedoch kann ein freies Ende des Griffbereichs 2 mit Kanten bzw. Flächen ausgebildet sein, die eine unbeabsichtigte Bewegung in aufgerichtetem Zustand zuverlässig verhindern und dadurch eine selbststabilisierende Lage erzwingen.

Betrachtet man das Gerät 1 nach der Figur 2, so sind dabei der Schwerpunkt 4 und die Form des Geräts 1 derart angeordnet bzw. ausgebildet, dass das Gerät 1 in der Art eines Stehaufmännchens funktioniert, wobei der Griffbereich 2 eine halbkugelartig oder halbellipsoide Gestalt aufweist. Wird somit das Gerät 1 beispielsweise horizontal auf die Unterlage 5 abgelegt, so sorgt die gewählte Schwerpunktlage und die gewählte Außengeometrie des Griffbereichs 2 dafür, dass sich das Gerät 1 zumindest geringfügig selbst aufrichtet und dadurch den erhitzten Arbeitsbereich 3 auf Distanz zur Unterlage 5 bringt. Um die Schwerpunktverlagerung in Richtung des freien Endes des Griffbereichs 2 zusätzlich zu unterstützen, können im Griffbereich 2 beispielsweise Gewichtselemente 7, in der Art von Metallgewichten, vorgesehen sein. Denkbar ist auch, dass im Griffbereich 2 eine Heizeinrichtung 8 und/oder ein Akkumulator 9 bzw. Batterien 10 angeordnet sind, die zur Schwerpunktverlagerung beitragen.

Durch die erfindungsgemäße Ausgestaltung des Gerätes 1 kann somit zuverlässig verhindert werden, dass dessen heißer Arbeitsbereich 3 mit einer beispielsweise temperaturempfindlichen oder sogar leicht entzündlichen Unterlage 5 in Kontakt tritt und dadurch ein Brand entstehen kann. Das erfindungsgemäße Gerät 1 nämlich, richtet sich bei beliebigem Ablegen auf der Unterlage 5 selbstständig derart aus, dass es eine selbststabilisierende Lage einnimmt und zugleich der Arbeitsbereich 3 so weit von der Unterlage 5 entfernt wird, dass insbesondere eine Brandgefahr zuverlässig vermieden werden kann. Dabei gilt, wie eingangs bereits erwähnt, dass das Gerät 1 nicht nur als Lockenstab oder als Haarglätter ausgebildet sein kann, sondern generell für beliebige Geräte verwendet werden kann, die einen heißen Arbeitsbereich 3 besitzen.

### Bezugszeichenliste

- 1: Gerät
- 2: Griffbereich
- 3: Arbeitsbereich
- 4: Schwerpunkt
- 5: Unterlage
- 6: Griffschutz
- 7: Gewichtselemente
- 8: Heizeinrichtung
- 9: Akku
- 10: Batterie

## Patentansprüche

1. Gerät (1), insbesondere ein Haarstylinggerät mit einem Griffbereich (2) und einem erhitzbaren Arbeitsbereich (3), wobei das Gerät (1) hinsichtlich seiner äußeren Form und seiner Schwerpunktlage derart ausgebildet ist, dass es bei einem beliebigen Ablegen auf einer Unterlage (5) eine selbststabilisierende und selbstaufrichtende Lage einnimmt, in welcher der erhitzbare Arbeitsbereich (3) nicht mit der Unterlage (5) in Kontakt steht, sondern sogar eine möglichst große Distanz zu dieser einnimmt, wobei der Schwerpunkt (4) und die Form des Geräts (1) derart angeordnet bzw. ausgebildet sind, dass das Gerät (1) in der Art eines Stehaufmännchens funktioniert, **dadurch gekennzeichnet, dass** der Griffbereich (2) eine halbkugelartige oder halbellipsoide Gestalt oder eine gömböcartige Außenform aufweist.

2. Gerät nach Anspruch 1, **dadurch gekennzeichnet, dass** das Gerät (1) als Lockenstab, als Lötkolben oder als Haarglätter ausgebildet ist.

3. Gerät nach Anspruch 1 oder 2, **dadurch gekennzeichnet, dass** im Griffbereich (2) Gewichtselemente (7) vorgesehen sind.

4. Gerät nach einem der Ansprüche 1 bis 3, **dadurch gekennzeichnet, dass** der Griffbereich (2) eine unrunde Außenkontur aufweist, die ein Rollen des Geräts (1) auf der Unterlage in abgelegtem Zustand verhindert.

5. Gerät nach einem der Ansprüche 1 bis 4 **dadurch gekennzeichnet, dass** im Griffbereich (2) eine Heizeinrichtung (8) und/oder ein Akkumulator (9) angeordnet sind.

## Claims

1. Device (1), in particular a hair styling device with a handle region (2) and a heatable working region (3), wherein the device (1) is embodied in terms of its external shape and its centre of gravity such that it adopts a self-stabilising and self-uprighting position when placed down onto a base support (5), in which the heatable working region (3) is not in contact with the base support (5), but even adopts a greatest possible distance therefrom, wherein the centre of gravity (4) and the shape of the device (1) are arranged or embodied such that the device (1) functions similarly to a weeble, **characterised in that** the handle region (2) has a semi-spherical or semi-ellipsoidal form or a gömböclike external shape.

2. Device according to claim 1, **characterised in that** the device (1) is embodied as a curling iron, as a soldering iron or as hair straighteners.

3. Device according to claim 1 or 2, **characterised in that** weight elements (7) are provided in the handle region (2).

4. Device according to one of claims 1 to 3, **characterised in that** the handle region (2) has a non-circular external contour, which prevents the device (1) from rolling on the base support in the placed-down state.

5. Device according to one of claims 1 to 4, **characterised in that** a heating apparatus (8) and/or a battery (9) are arranged in the handle region (2).

## Revendications

1. Appareil (1), en particulier appareil de coiffure avec une zone de préhension (2) et une zone de travail chauffante (3), dans lequel l'appareil (1) est exécuté de telle manière au niveau de sa forme extérieure et de l'emplacement de son centre de gravité qu'il adopte, lors d'une quelconque dépose sur un support (5), automatiquement une position débout à stabilisation automatique dans laquelle la zone de travail chauffante (3) ne se trouve pas en contact avec le support (5) mais adopte même une distance aussi importante que possible par rapport à celui-ci, dans lequel le centre de gravité (4) et la forme de l'appareil (1) sont disposés resp. exécutés de telle sorte que l'appareil (1) fonctionne à la manière d'un poussah, **caractérisé en ce que** la zone de préhension (2) présente une forme hémisphérique ou hémi-ellipsoïdale ou une forme extérieure de gömböc.

2. Appareil selon la revendication 1, **caractérisé en ce que** l'appareil (1) est exécuté sous forme de fer à boucler, de fer à souder ou de lisseur à cheveux.

3. Appareil selon la revendication 1 ou 2, **caractérisé en ce que** des éléments de poids (7) sont prévus dans la zone de préhension (2).

4. Appareil selon l'une des revendications 1 à 3, **caractérisé en ce que** la zone de préhension (2) présente un contour extérieur ovalisé qui empêche l'appareil (1) de rouler sur le support à l'état déposé.

5. Appareil selon l'une des revendications 1 à 4, **caractérisé en ce qu'**un dispositif de chauffe (8) et/ou un accumulateur (9) est disposé dans la zone de préhension (2).
